# EUROPEAN PATENT APPLICATION

(11) **EP 4 654 675 A1**
(43) Date of publication of application: **26.11.2025**
(21) Application number: 23916721.6
(22) Date of filing: 18.01.2023
(51) Int. Cl.: H04W 52/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: HE, Chuanfeng, Dongguan, Guangdong 523860 (CN)
(74) Representative: Taor, Simon Edward William
(86) International application number: PCT/CN2023/072844
(87) International publication number: WO 2024/152234

(57) **Abstract**

Provided are a wireless communication method, a terminal device, and a network device, which are beneficial for reducing resource overhead and wake up delay caused when a network device wakes up a main receiver of a terminal device by means of a wake up signal. The method comprises: in a first communication state, receiving, by a terminal device, downlink information according to first information by using a main receiver of the terminal device, wherein, in the first communication state, a wake up receiver of the terminal device detects a wake up signal (WUS) used for waking up the main receiver of the terminal device, and the first information comprises at least one of the following: a timer, an uplink transmission demand of the terminal device, and a downlink receiving demand of the terminal device.

## Description

### TECHNICAL FIELD

Embodiments of the disclosure relate to the field of communications, and more particularly to a method for wireless communication, a terminal device and a network device.

### BACKGROUND

In some scenarios, in order to save power for a terminal device, it is considered that a Wake Up Signal (WUS) is received through a Wake Up Receiver (WUR), and a main receiver is turned on based on an indication of the WUS. The WUR is characterized by an extremely low cost, an extremely low complexity and an extremely low power consumption. However, a mechanism for turning on the main receiver need to be optimized.

### SUMMARY

The disclosure provides a method for wireless communication, a terminal device and a network device, which are beneficial for reducing a resource overhead and a wake up delay caused by waking up a main receiver of the terminal device through a WUS from the network device.

In a first aspect, a method for wireless communication is provided, which includes the following operation. A terminal device receives, in a first communication state, downlink information using a main receiver of the terminal device based on first information. A WUR of the terminal device monitors a WUS for waking up the main receiver of the terminal device in the first communication state, and the first information includes at least one of: a timer, an uplink transmission requirement of the terminal device, or a downlink reception requirement of the terminal device.

In a second aspect, a method for wireless communication is provided, which includes the following operation. When transmitting first indication information to a network device in a first communication state, a terminal device receives downlink information using a main receiver of the terminal device. A WUR of the terminal device monitors a WUS for waking up the main receiver of the terminal device in the first communication state.

In a third aspect, a method for wireless communication is provided, which includes the following operation. A network device transmits downlink information to a terminal device in a first communication state based on first information. A WUR of the terminal device monitors a WUS for waking up a main receiver of the terminal device in the first communication state. The downlink information is received by the terminal device using the main receiver, and the first information includes at least one of: a timer, an uplink transmission requirement of the terminal device, or a downlink reception requirement of the terminal device.

In a fourth aspect, a method for wireless communication is provided, which includes the following operation. A network device receives first indication information from a terminal device. The first indication information is transmitted by the terminal device in a first communication state, and a WUR of the terminal device monitors a WUS for waking up a main receiver of the terminal device in the first communication state.

The first indication information indicates that the first communication state is exited, or that the main receiver of the terminal device is in a turned-on state, or that the main receiver of the terminal device is started to receive the downlink information.

In a fifth aspect, a terminal device is provided for performing the method in any of the above first aspect or the above second aspect, or any of the implementations thereof.

Specifically, the terminal device includes a functional module configured to perform the method in any of the above first aspect or the above second aspect, or any of the implementations thereof.

In a sixth aspect, a network device is provided for performing the method in any of the above third aspect or the above fourth aspect, or any of the implementations thereof.

Specifically, the network device includes a functional module configured to perform the method in any of the above third aspect or the above fourth aspect, or any of the implementations thereof.

In a seventh aspect, a terminal device is provided, which includes a processor and a memory. The memory is configured to store a computer program, and the processor is configured to call the computer program stored in the memory and run the computer program, to perform the method in any of the above first aspect or the above second aspect, or any of the implementations thereof.

In an eighth aspect, a network device is provided, which includes a processor and a memory. The memory is configured to store a computer program, and the processor is configured to call the computer program stored in the memory and run the computer program, to perform the method in any of the above third aspect or the above fourth aspect, or any of the implementations thereof.

In a ninth aspect, a chip is provided for implementing the method in any of the above first aspect to the above fourth aspect, or any of the implementations thereof. Specifically, the chip includes a processor configured to call a computer program from a memory and run the computer program, to cause a device equipped with the chip to perform the method in any of the above first aspect to the above fourth aspect, or any of the implementations thereof.

In a tenth aspect, a computer-readable storage medium is provided for storing a computer program. The computer program causes a computer to perform the method in any of the above first aspect to the above fourth aspect, or any of the implementations thereof.

In an eleventh aspect, a computer program product is provided, which includes computer program instructions that cause a computer to perform the method in any of the above first aspect to the above fourth aspect, or any of the implementations thereof.

In a twelfth aspect, a computer program is provided. When the computer program is executed on a computer, the computer is caused to perform the method in any of the above first aspect to the above fourth aspect, or any of the implementations thereof.

In the above technical solution, the terminal device can receive the downlink information using the main receiver of the terminal device or turn on the main receiver autonomously, based on at least one of: the timer, the uplink transmission requirement, or the downlink reception requirement. On the one hand, the resource overhead and the wake up delay caused by waking up the main receiver of the terminal device through the WUS from the network device can be reduced. On the other hand, a mechanism for turning on the main receiver of the terminal device is enriched, and an impact on a communication of the terminal device when the main receiver is turned on only via the WUS can be reduced.

### BRIEF DESCRIPTION OF THE DRAWINGS

FIG. 1 is a schematic diagram illustrating an architecture of a communication system according to an embodiment of the disclosure.
FIG. 2 is a schematic diagram illustrating a composition of a Discontinuous Reception (DRX) cycle.
FIG. 3 is a schematic diagram illustrating whether a terminal monitors a Physical Downlink Control Channel (PDCCH) is indicated through a power saving signal.
FIG. 4 is a schematic diagram illustrating a position of a Paging Frame (PF) in a paging DRX cycle and a position of a Paging Occasion (PO) in the PF.
FIG. 5 is a schematic diagram illustrating whether User Equipment (UE) in a paging sub-group receives a paging is indicated through a power saving signal.
FIG. 6 is a block diagram of a WUS-based receiver system.
FIG. 7 is a schematic diagram illustrating generation of a WUS through an On-Off Keying (OOK) modulation.
FIG. 8 is a schematic diagram illustrating a method for wireless communication according to an embodiment of the disclosure.
FIG. 9 is a schematic diagram illustrating a control of a state of a main receiver based on a timer according to an embodiment of the disclosure.
FIG. 10 is a schematic diagram illustrating a WUS resource according to an embodiment of the disclosure.
FIG. 11 is a schematic diagram illustrating another method for wireless communication according to an embodiment of the disclosure.
FIG. 12 is a schematic block diagram of a terminal device according to an embodiment of the disclosure.
FIG. 13 is a schematic block diagram of another terminal device according to an embodiment of the disclosure.
FIG. 14 is a schematic block diagram of a network device according to an embodiment of the disclosure.
FIG. 15 is a schematic block diagram of another network device according to an embodiment of the disclosure.
FIG. 16 is a schematic block diagram of a communication device according to an embodiment of the disclosure.
FIG. 17 is a schematic block diagram of a chip according to an embodiment of the disclosure.
FIG. 18 is a schematic block diagram of a communication system according to an embodiment of the disclosure.

### DETAILED DESCRIPTION

The technical solutions in the embodiments of the disclosure will be described below in combination with the drawings in the embodiments of the disclosure. It is apparent that the described embodiments are not all embodiments but part of embodiments of the disclosure. All other embodiments obtained by those of ordinary skill in the art based on the embodiments in the disclosure without creative work shall fall within the scope of protection of the disclosure.

The technical solutions in the embodiments of the disclosure may be applied to various communication systems, such as: a Global System of Mobile communication (GSM), a Code Division Multiple Access (CDMA) system, a Wideband Code Division Multiple Access (WCDMA) system, a General Packet Radio Service (GPRS) system, a Long Term Evolution (LTE) system, an Advanced long term evolution (LTE-A) system, a New Radio (NR) system, an evolved NR system, an LTE-based access to unlicensed spectrum (LTE-U) system, an NR-based access to unlicensed spectrum (NR-U) system, a Non-Terrestrial Network (NTN) system, a Universal Mobile Telecommunication System (UMTS), a Wireless Local Area Network (WLAN), a Wireless Fidelity (WiFi), a 5th-Generation (5G) system, a cellular Internet of Things (IoT) system, a cellular passive IoT system or other communication systems.

In general, a traditional communication system supports a limited number of connections and is easy to be implemented. However, with the development of communication technologies, a mobile communication system will not only support the traditional communication, but also support, for example, a Device to Device (D2D) communication, a Machine to Machine (M2M) communication, a Machine Type Communication (MTC), a Vehicle to Vehicle (V2V) communication, or a Vehicle to everything (V2X) communication, etc. The embodiments of the disclosure may also be applied to these communication systems.

Optionally, the communication system in the embodiments of the disclosure may be applied to a Carrier Aggregation (CA) scenario, a Dual Connectivity (DC) scenario, or a Standalone (SA) network deployment scenario.

Optionally, the communication system in the embodiments of the disclosure may be applied to an unlicensed spectrum, where the unlicensed spectrum may also be regarded as a shared spectrum. Alternatively, the communication system in the embodiments of the disclosure may also be applied to a licensed spectrum, where the licensed spectrum may also be regarded as a non-shared spectrum.

The embodiments of the disclosure describe various implementations in combination with a network device and a terminal device. The terminal device may be referred to as UE, an access terminal, a user unit, a user station, a mobile station, a mobile platform, a remote station, a remote terminal, a mobile device, a user terminal, a terminal, a wireless communication device, a user agent, a user device or the like.

In the embodiments of the disclosure, the network device may be a device for communicating with a mobile device. The network device may be an Access Point (AP) in WLAN, a Base Transceiver Station (BTS) in GSM or CDMA, a NodeB (NB) in WCDMA, an Evolved Node B (eNB or eNodeB) in LTE, a relay station or an access point, a vehicle-mounted device, a wearable device, a network device (gNB) in an NR network, a network device in a cellular IoT, a network device in a cellular passive IoT, a network device in a future evolved Public Land Mobile Network (PLMN), or a network device in an NTN network or the like.

In the embodiments of the disclosure, as an example rather than a limitation, the network device may have mobility characteristics. For example, the network device may be a mobile device. Optionally, the network device may be a satellite or a balloon station. For example, the satellite may be a low-Earth orbit (LEO) satellite, a medium-Earth orbit (MEO) satellite, a geostationary Earth orbit (GEO) satellite, a high elliptical orbit (HEO) satellite and the like. Optionally, the network device may further be a base station arranged on land, water and the like.

In the embodiments of the disclosure, the network device may provide a service for a cell, and the terminal device communicates with the network device through a transmission resource (e.g., a frequency-domain resource, or a spectrum resource) used by the cell. The cell may be a cell corresponding to the network device (e.g., the base station), and the cell may belong to a macro base station or belong to a base station corresponding to a small cell. The small cell may include: a Metro cell, a Micro cell, a Pico cell, a Femto cell and the like. These small cells have the characteristics of a small coverage and a low transmission power, and are suitable for providing a high-speed data transmission service.

The terminal device may be a station (ST) in WLAN, a cellular telephone, a cordless phone, a Session Initiation Protocol (SIP) phone, a Wireless Local Loop (WLL) station, a Personal Digital Assistant (PDA), a handheld device with a wireless communication function, a computing device or other processing devices connected to a wireless modem, a vehicle-mounted device, a wearable device, a terminal device in a next generation communication system such as an NR network, a terminal device in a future evolved PLMN, a terminal device in a cellular IoT, a terminal device in a cellular passive IoT or the like.

In the embodiments of the disclosure, the terminal device may be deployed on land including indoor or outdoor, hand-held, wearable or vehicle-mounted, may also be deployed on a water surface (e.g., a ship), or may further be deployed in the air (e.g., an airplane, a balloon, a satellite and the like).

In the embodiments of the disclosure, the terminal device may be a Mobile Phone, a Pad, a computer with a wireless transceiver function, a Virtual Reality (VR) terminal device, an Augmented Reality (AR) terminal device, a wireless terminal device in an industrial control, a wireless terminal device in a self-driving, a wireless terminal device in a remote medical, a wireless terminal device in a smart grid, a wireless terminal device in a transportation safety, a wireless terminal device in a smart city, a wireless terminal device in a smart home, or the like.

In the embodiments of the disclosure, as an example rather than a limitation, the terminal device may further be a wearable device. The wearable device, known as a wearable smart device, is a collective term of wearable devices which are developed by applying a wearable technology for intelligently design of daily wearable items, such as glasses, a glove, a watch, a cloth and shoes. The wearable device is a portable device that is worn directly on the body or integrated into the cloth or an accessory of a user. The wearable device is not only a hardware device, but also can realize a powerful function through software support, data interaction and cloud interaction. Broadly speaking, the wearable smart device includes, for example, a smart watch or smart glass, which is full-featured and large-sized and may realize complete or partial functionality without relying on a smart phone, as well as various smart bracelets and smart jewelry for physical sign monitoring, which only focus on a certain type of application functionality and need to be used in conjunction with other devices such as a smart phone.

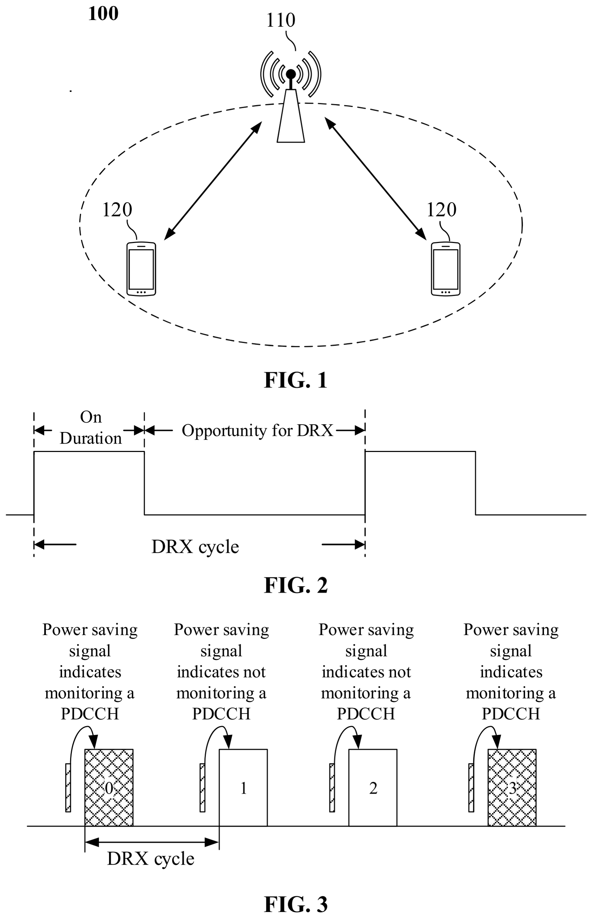

Illustratively, a communication system 100 to which the embodiments of the disclosure are applied is illustrated in FIG. 1. The communication system 100 may include a network device 110, which may be a device that communicates with a terminal device 120 (or referred to as a communication terminal, or a terminal). The network device 110 may provide communication coverage for a particular geographic area and may communicate with terminal devices located in the coverage area.

FIG. 1 schematically illustrates one network device and two terminal devices. Optionally, the communication system 100 may include multiple network devices and other numbers of terminal devices may be included in the coverage range of each network device, which is not limited by the embodiments of the disclosure.

Optionally, the communication system 100 may further include other network entities such as a network controller and a Mobility Management Entity (MME), which is not limited by the embodiments of the disclosure.

It should be understood that a device with a communication function in a network/system in the embodiments of the disclosure may be referred to as a communication device. For example, in the communication system 100 illustrated in FIG. 1, the communication device may include the network device 110 and the terminal device 120 with communication functions. The network device 110 and the terminal device 120 may be specific devices as described above, which will not be repeated here. The communication device may further include other devices in the communication system 100, for example, a network controller, an MME and other network entities, which are not limited in the embodiments of the disclosure.

It should be understood that the terms "system" and "network" used herein are often used interchangeably. The term "and/or" is used herein to describe an association between associated objects and represents that three relationships may exist between the associated objects. For example, A and/or B may represent three conditions: independent existence of A, existence of both A and B and independent existence of B. In addition, the character "/" used herein usually represents that the associated objects before and after the character "/" form an "or" relationship.

It should be understood that the "indication" mentioned in the embodiments of the disclosure may be a direct indication, an indirect indication, or a representation of an association. For example, A indicates B, which may represent that A directly indicates B, for example, B may be obtained through A; A indicates B, which may also represent that A indirectly indicates B, for example, A indicates C, and B may be obtained through C; or, A indicates B, which may further represent that there is an association between A and B.

In the description of the embodiments of the disclosure, the term "corresponding to" may represent a direct correspondence or an indirect correspondence between two items, may also represent an association between the two items, or may further be a relationship such as indication and being indicated, configuration and being configured or the like.

In the embodiments of the disclosure, "predefinition/predefined" may be implemented by pre-storing corresponding codes, or tables in devices (e.g., including the terminal device and the network device) or by other ways that may be used to indicate related information, and the specific implementation thereof is not limited herein. For example, the predefinition may refer to what is defined in a protocol.

In the embodiments of the disclosure, the "protocol" may refer to standard protocols in the communication field, including such as an LTE protocol, an NR protocol, and related protocols to be applied in a future communication system, which are not limited herein.

In some scenarios, in order to save power for the terminal device, a DRX mechanism is introduced. The terminal device needs to continuously monitor a PDCCH during each "On Duration" to determine whether the base station schedules a data transmission to the terminal device. The DRX mechanism includes configuring a DRX cycle for a UE in a Radio Resource Control (RRC) connected (RRC_CONNECTED) state, and as illustrated in FIG. 2, the DRX cycle consists of an "On Duration" and an "Opportunity for DRX". During the "On Duration", the UE monitors and receives a downlink channel including the PDCCH and a downlink signal. During the "Opportunity for DRX", the UE receives no downlink channel such as the PDCCH and the downlink signal, to save the power consumption.

However, for most of UEs, there is no need to receive data transmissions for a long time, but it is still necessary to maintain a regular wake up mechanism to monitor a possible downlink transmission. Power saving for such UEs may be further optimized. In some scenarios, a power saving signal is introduced for the power saving of the UE in the RRC_CONNECTED state to achieve the further power saving. The power saving signal is used in conjunction with the DRX mechanism, and the terminal receives an indication of the power saving signal before the DRX on duration. When the terminal has a data transmission during a DRX cycle, the terminal is "woken up" by the power saving signal to monitor the PDCCH during the DRX on duration. Otherwise, when the terminal has no data transmission in the DRX cycle, the terminal is not "woken up" by the power saving signal, and the terminal does not need to monitor the PDCCH during the DRX on duration. The power saving signal is carried by the PDCCH through a DCI format 2_6.

A process of indicating whether the terminal monitors the PDCCH during the DRX on duration by the power saving signal is illustrated in FIG. 3.

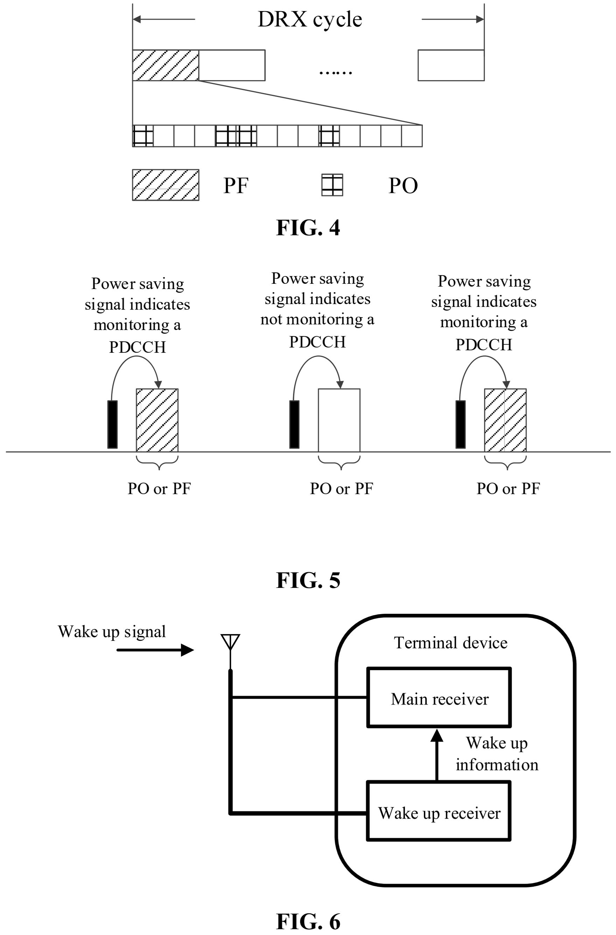

In some scenarios, the power saving for the UE in an RRC idle (RRC_IDLE) state or an RRC inactive (RRC_INACTIVE) state when receiving the paging message is optimized, and a similar power saving signal is introduced. When a paging message is received through the DRX mechanism, a PO is present in a DRX cycle. The UE only receives the paging message in the PO, and does not receive the paging message outside the PO, so as to achieve the purpose of the power saving. A PF indicates a system frame number in which the paging message occurs, and the PO indicates a time at which the paging message may occur. The PF may include one or more POs, and the UE only needs to monitor its own PO in each DRX cycle or paging cycle. The UE calculates a position of the PF corresponding to itself and a position of the PO in the PF based on its own ID. FIG. 4 is a schematic diagram illustrating a position of a PF in a paging DRX cycle and a position of a PO in the PF.

However, in practice, a probability that the UE may be paged is not high. The UE periodically monitors the PDCCH in the corresponding PO, and if no paging indication information transmitted to the UE is monitored, the power of the UE will be wasted. A further power saving signal, called a Paging Early Indication (PEI), is introduced to indicate, before a target PO arrives, whether the UE will receive a paging PDCCH at the target PO. The power saving signal is carried by the PDCCH through a DCI format 2_7.

As illustrated in FIG. 5, the power saving signal indicates whether a UE in one or more paging sub-groups will receive a paging in the corresponding PF or PO.

In some scenarios, the power saving for the UE in the RRC_CONNECTED state continues to be enhanced. For example, an enhanced scheme of a search space set group switching and a PDCCH skipping scheme, which allows the UE to skip PDCCH detection when necessary to save power, have been introduced. Control information related to the search space set group switching and the PDCCH skipping is also carried by the PDCCH.

For further power saving in the UE, in some scenarios, it is considered to introduce a WUR to receive a WUS. The WUR is characterized by an extremely low cost, an extremely low complexity and an extremely low power consumption, and the WUR mainly receives the WUS based on an envelope detection. Therefore, a modulation method and a waveform of the WUS received by the WUR are different from those of a signal carried by the PDCCH. The WUS may be an envelope signal obtained by performing Amplitude Shift Keying (ASK) modulation on a carrier signal. Demodulation of the envelope signal is also completed by driving a low-power circuit based mainly on an energy provided by a wireless radio frequency signal, and thus, the WUR may be passive. The WUR may also be powered by the terminal. Regardless of the power supply mode, the WUR greatly reduces power consumption compared with a traditional receiver of the UE. In a specific implementation, the WUR may be integrated with the UE, or may be used as an additional module of a receiver of the UE, or may be used as a separate wake up function module in the UE.

In some implementations, a block diagram of a WUS-based receiver system is illustrated in FIG. 6, the WUR receives the WUS, and the WUS may indicate the UE to turn on a main receiver if the UE is required to turn on the main receiver. Otherwise, the main receiver of the UE may be in a turned-off state.

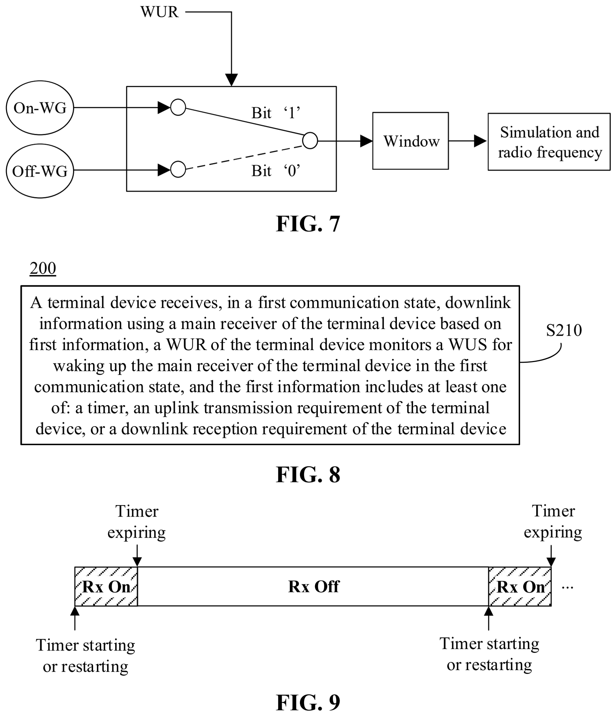

The WUR does not need to be turned-on and turned-off like the traditional receiver to save power, but may be activated by the WUS at any time to receive the WUS. For example, the WUS in 802.11 technology employs an OOK modulation. A principle of the OOK modulation is to modulate an amplitude of the carrier signal to a non-zero value and a zero value, corresponding to "On" and "Off", respectively, to represent information bits. The OOK is also known as a binary Amplitude Shift Keying (2ASK). As illustrated in FIG. 7, bit 1 is modulated to "On" and bit 0 is modulated to "Off".

Further power saving for the UE may be achieved by waking up the main receiver of the UE through the WUR. However, when the main receiver of the UE is turned off and will be turned on only through the WUS, a communication of the terminal device may be affected. For example, the turned-off state of the main receiver may cause a communication interruption. Therefore, how to optimize a mechanism for turning on the main receiver is an urgent problem to be solved.

In order to facilitate understanding of the technical solutions in the embodiments of the disclosure, the technical solutions in the disclosure will be described in detail below in combination with the specific embodiments, and the above related art may be arbitrarily combined, as an optional solution, with the technical solutions in the embodiments of the disclosure, all of which belong to the scope of protection of the embodiments of the disclosure. The embodiments of the disclosure include at least some of the following contents.

FIG. 8 is a schematic diagram illustrating a method for wireless communication according to an embodiment of the disclosure. As illustrated in FIG. 8, the method 200 includes at least some of the following contents.

At S210, a terminal device receives, in a first communication state, downlink information using a main receiver of the terminal device based on first information. A WUR of the terminal device monitors a WUS for waking up the main receiver of the terminal device in the first communication state.

Correspondingly, a network device transmits the downlink information to the terminal device in the first communication state based on the first information.

In some embodiments of the disclosure, the method 200 further includes the following contents.

The terminal device turns on, in the first communication state, the main receiver of the terminal device based on the first information.

In some embodiments, the first information may include reasons, other than monitoring the WUS, that trigger the terminal device to use the main receiver (or turn on the main receiver) for signal reception, for example, an urgent uplink transmission, a periodic downlink reception, an insufficient ability of the WUR to perform a specific operation, or an inadequate accuracy of performing the specific operation through the WUR, and thus requiring the main receiver to be turned on to perform the operation, etc. For example. when the main receiver is in a turned-off state, the terminal device may perform certain measurements using the WUR, which may assist in determining whether to turn on the main receiver for more accurate measurements.

In some embodiments, the first information includes, but is not limited to, at least one of: a timer, an uplink transmission requirement of the terminal device, or a downlink reception requirement of the terminal device.

In the embodiments of the disclosure, a behavior of the network device corresponds to a behavior of the terminal device, and the network device and the terminal device have a same understanding of the state of the main receiver.

For example, the network device may transmit the downlink information based on the timer. During a running time of the timer, the network device assumes that the terminal device may receive the downlink information using the main receiver, or that the main receiver of the terminal device is in a turned-on state. Correspondingly, the terminal device may receive the downlink information using the main receiver based on the timer.

For another example, the terminal device may perform an uplink transmission when there is an uplink transmission demand, and when the network device receives the uplink transmission, the network device determines that the terminal device can receive the downlink information using the main receiver or that the main receiver of the terminal device is in the turned-on state, and then the network device may transmit the downlink information. Further, the terminal device may receive the downlink information using the main receiver.

For yet another example, the network device may perform downlink transmission periodically or regularly. Correspondingly, the terminal device may receive the downlink transmission from the network device using the main receiver periodically or regularly.

Hereinafter, the operation that the terminal device receives the downlink information using the main receiver based on the first information will be described as an example, and the behavior of the network device corresponds to the behavior of the terminal device, which will not be repeatedly described here for the sake of brevity.

### First embodiment:

In some embodiments, the terminal device may receive the downlink information using the main receiver of the terminal device based on the timer, and/or turn on the main receiver of the terminal device based on the timer.

Correspondingly, the network device may transmit the downlink information to the terminal device based on the timer.

In some embodiments, the downlink information may be downlink common control information, such as System Information (SI), slot format indication information (or called Slot Format Indicator (SFI)), or downlink scheduling information, etc.

In the related art, when the main receiver is in the turned-off state, if the terminal device has not received the WUS to wake up the main receiver of the terminal device, the main receiver of the terminal device will remain in the turned-off state. However, some communication requirements need to be implemented periodically by the terminal device, such as performing a Radio Resource Management (RRM) measurement, receiving a system message, receiving the downlink common control information, and the like. For the communication requirements that need to be implemented by the main receiver, if the main receiver of the terminal device is woken up by the WUS from the network device, a resource overhead and a wake up delay will be brought by the WUS. After the main receiver is woken up, if there is no other communication requirements, the main receiver of the terminal device needs to be turned off again through a certain mechanism, which will add some overheads. In some embodiments of the disclosure, the terminal device receives the downlink information using the main receiver of the terminal device based on the timer, or turns on the main receiver of the terminal device based on the timer, which is beneficial for reducing the resource overhead and the wake up delay caused by waking up the main receiver of the terminal device through the WUS from the network device.

In some embodiments, the terminal device may receive the downlink information periodically using the main receiver of the terminal device based on the timer, or turn on the main receiver of the terminal device periodically based on the timer.

In some embodiments, during the running time of the timer, the terminal device may perform measurements on a serving cell and neighboring cells, or receive Downlink Control Information (DCI), such as receiving the system message, etc.

In some embodiments, the main receiver of the terminal device may be periodically turned on for a certain duration, that is, the main receiver of the terminal device has a certain duty cycle, and the main receiver of the terminal device operates for a certain duration in each duty cycle.

For example, as illustrated in FIG. 9, at a starting time of each cycle, the timer is started or restarted, and the terminal device turns on the main receiver, or receives the downlink information using the main receiver of the terminal device. When the timer is expired, the main receiver is turned off, or a reception of the downlink information using the main receiver of the terminal device is stopped. The timer may be used to control a turned-on duration of the main receiver of the terminal device.

In some embodiments, a turned-on cycle of the main receiver of the terminal device and the turned-on duration in the cycle may be predefined, or may be configured by the network device, or may be determined based on a monitoring cycle for the downlink information (for example, a cycle for the RRM measurement).

That is, the network device and the terminal device have the same understanding of the state of the main receiver of the terminal device.

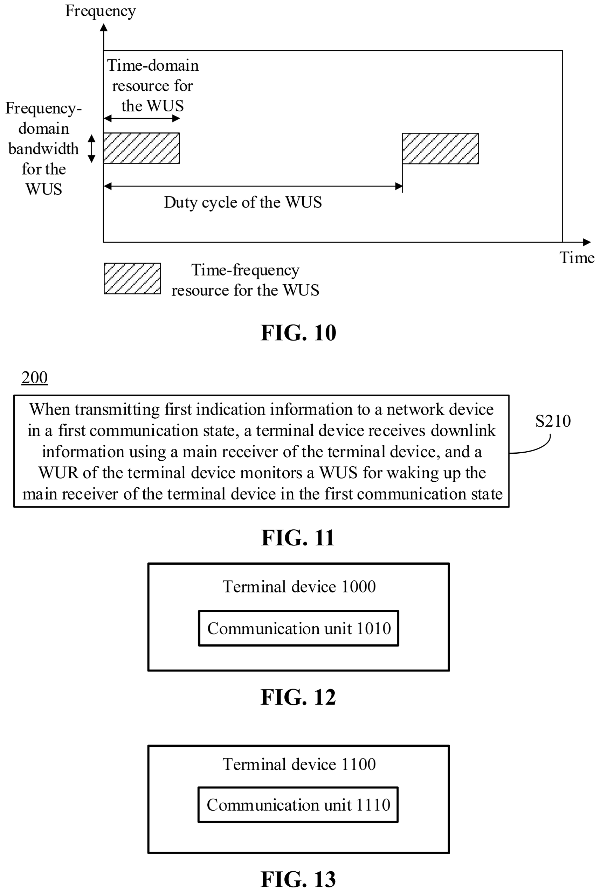

In some embodiments, the turned-on cycle of the main receiver of the terminal device may be determined based on a monitoring cycle for the WUS. For example, the turned-on cycle of the main receiver may be N times the monitoring cycle for the WUS, where N is a positive integer. As illustrated in FIG. 10, the WUR of the terminal device may be periodically turned on to receive the WUS. A time-domain resource carrying the WUS may be periodic, and the cycle may be referred to as the duty cycle.

In some embodiments, the main receiver of the terminal device may always be turned on during the running time of the timer, or the terminal device may also turn on the main receiver based on a monitoring occasion for a downlink reception. For example, during the running time of the timer, the main receiver is used for the downlink reception only in the monitoring occasion for the downlink reception, that is, the main receiver is turned on only in the monitoring occasion for the downlink reception.

In some embodiments, the terminal device receives, based on control information from the network device, the downlink information periodically using the main receiver based on the timer, or turns on the main receiver periodically based on the timer. That is, the network device may control the turning-on and turning-off of the main receiver in the periodic turning-on mechanism.

For example, the network device may carry the control information through the WUS for controlling whether the terminal device periodically turns on the main receiver based on the timer or whether the terminal device receives the downlink information periodically based on the timer.

For another example, the network device may carry the control information through higher layer signaling for controlling whether the terminal device turns on the main receiver periodically based on the timer or whether the terminal device receives the downlink information periodically based on the timer.

In some embodiments, the terminal device may stop receiving the downlink information using the main receiver of the terminal device or turn off the main receiver of the terminal device based on the timer.

For example, when the timer expires, the reception of the downlink information using the main receiver of the terminal device may be stopped or the main receiver of the terminal device may be turned off.

Second embodiment: the terminal device receives the downlink information using the main receiver based on the uplink transmission requirement.

Correspondingly, the network device transmits the downlink information based on the uplink transmission requirement of the terminal device. For example, when the network device receives an uplink transmission associated with the uplink transmission requirement of the terminal device, the network device transmits the downlink information associated with the uplink transmission.

In some embodiments, when there is an uplink transmission requirement, the terminal device may receive the downlink information using the main receiver of the terminal device and/or turn on the main receiver of the terminal device.

Specifically, although the uplink transmission requirement is a transmission requirement of the terminal device, the terminal device needs to receive corresponding downlink information (e.g., scheduling information) after the terminal device performs the uplink transmission. Therefore, the terminal device may receive the downlink information using the main receiver based on the uplink transmission requirement, that is, turn on the main receiver.

In some embodiments, the uplink transmission requirement may be an uplink transmission requirement triggered by the terminal device, that is, the network device cannot learn the uplink transmission requirement, and therefore, the network device cannot wake up the main receiver of the terminal device through the WUS in advance. In this case, the terminal device may autonomously turn on the main receiver of the terminal device or exit the turned-off state of the main receiver, and receive the downlink information using the main receiver, which is beneficial for reducing the resource overhead and the wake up delay caused by waking up the main receiver of the terminal device through the WUS from the network device.

In some embodiments, the terminal device may also stop receiving the downlink information using the main receiver or turn off the main receiver based on a completion status of the uplink transmission requirement.

For example, when the uplink transmission associated with the uplink transmission requirement is completed, the reception of the downlink information using the main receiver is stopped, or the main receiver is turned off.

For another example, when the uplink transmission associated with the uplink transmission requirement is completed and there is no new communication requirement, the receiving of the downlink information using the main receiver is stopped, or the main receiver is turned off.

In some embodiments, the completion of the uplink transmission associated with the uplink transmission requirement may include a successful transmission of the uplink transmission, for example, no retransmission scheduling for the uplink transmission is received, which may be considered the successful transmission of the uplink transmission, or a new transmission scheduling from the network device is received, which may be considered the successful transmission of the uplink transmission.

In some embodiments, the uplink transmission associated with the uplink transmission requirement of the terminal device may refer to an uplink transmission triggered by the terminal device, a temporary uplink transmission, an urgent uplink transmission, or the like, for example, including but not limited to at least one of: a Small Data Transmission (SDT), a random access, a Scheduling Request (SR) transmission, or an uplink grant free transmission.

For example, for a terminal device in the RRC_IDLE state or the RRC_INACTIVE state, when there is an SDT requirement, the downlink information is received using the main receiver of the terminal device, and/or the main receiver of the terminal device is turned on.

For another example, for a terminal device in the RRC_IDLE state or the RRC_INACTIVE state, when it is necessary to initiate the random access, the downlink information is received using the main receiver of the terminal device, and/or the main receiver of the terminal device is turned on.

For another example, for a terminal device in the RRC_CONNECTED state, when the uplink grant free transmission is initiated, the downlink information is received using the main receiver of the terminal device, and/or the main receiver of the terminal device is turned on.

For another example, for a terminal device in the RRC_CONNECTED state, when it is necessary to perform a scheduling-based uplink transmission, the downlink information is received using the main receiver of the terminal device, and/or the main receiver of the terminal device is turned on.

In some embodiments, the downlink information received by the terminal device using the main receiver has a correlation with the uplink transmission associated with the uplink transmission requirement of the terminal device.

That is, in case that the terminal device has the uplink transmission requirement, the terminal device may receive the downlink information associated with the uplink transmission using the main receiver, or turn on the main receiver to receive the downlink information associated with the uplink transmission.

In some embodiments, the uplink transmission is the SDT, and the associated downlink information includes a downlink reference signal and/or downlink scheduling information.

In some embodiments, the uplink transmission is the random access, and the associated downlink information includes a downlink reference signal and/or downlink information in a random access procedure.

In some embodiments, the uplink transmission is the SR transmission, and the associated downlink information includes downlink scheduling information.

In some embodiments, the uplink transmission is the uplink grant free transmission, and the associated downlink information includes downlink scheduling information.

In some embodiments, the downlink reference signal may include, but is not limited to, a Synchronization Signal Block (SSB), a Channel State Information Reference Signal (CSI-RS).

In some embodiments, the SDT may be a SDT over Random Access Channel (RACH) (RA-SDT) or may be a SDT over Configured Grant (CG) (CG-SDT).

In some embodiments, the random access may be a random access triggered by the RA-SDT, or may be a random access triggered by other reasons, such as an RRC connection establishment or re-establishment, a handover, an RRC request, an SI request, a Beam Failure Recovery (BFR), a timing advance acquisition, etc.

In some embodiments, when a transmission condition for the SDT is satisfied, the terminal device may actively initiate the SDT by the RA-SDT or CG-SDT. The SDT process is not controlled by the network device, so the network device cannot wake up the main receiver of the terminal device through the WUS in advance. In this case, the terminal device may autonomously turn on the main receiver of the terminal device or exit the turned-off state of the main receiver, for receiving the downlink information related to the SDT, such as a retransmission scheduling for the SDT.

In some embodiments, the initiation of the random access procedure by the terminal device is not controlled by the network device, so the network device cannot wake up the main receiver of the terminal device through the WUS in advance. In this case, the terminal device may autonomously turn on the main receiver of the terminal device or exit the turned-off state of the main receiver, for receiving the downlink information in the random access procedure, such as Msg2 or Msg4.

In some embodiments, an uplink service is initiated by the terminal device, and the network device will initiate a reasonable scheduling only after learning a requirement for the uplink service. Therefore, when the terminal device has an uplink transmission requirement, the terminal device first needs to transmit an SR to the network device, and requests the network device to schedule an uplink resource for the terminal device. The transmission of the SR by the terminal device is not controlled by the network device, so the network device cannot wake up the main receiver of the terminal device through the WUS in advance. In this case, the terminal device may autonomously turn on the main receiver of the terminal device or exit the turned-off state of the main receiver, to receive the downlink scheduling information from the network device.

In some embodiments, the uplink grant free transmission may refer to a case that the network device pre-allocates an uplink transmission resource for the terminal device, and the terminal device may directly initiate the uplink transmission on the pre-allocated resource based on a service requirement, for example, the uplink transmission based on a CG resource. The uplink grant free transmission is not scheduled by the network device, so the network device cannot wake up the main receiver of the terminal device through the WUS in advance. In this case, the terminal device may autonomously turn on the main receiver of the terminal device or exit the turned-off state of the main receiver, to receive downlink information related to the uplink grant free transmission, for example, retransmission scheduling information for the uplink grant free transmission.

In some embodiments, a receiver and a transmitter of the terminal device are usually integrated, and turning the transmitter on while keeping the receiver off does not result in additional power saving. Therefore, the terminal device needs to use the transmitter when the terminal device needs to perform the uplink transmission, and accordingly, the main receiver of the terminal device may also be turned on.

In some embodiments, a time when the terminal device performs the uplink transmission is associated with a time when the terminal device receives information using the main receiver. In other words, the time when the terminal device performs the uplink transmission is associated with the time when the terminal device turns on the main receiver.

For example, the main receiver of the terminal device is turned on before the terminal device performs the uplink transmission.

As another example, the main receiver of the terminal device is turned on after the terminal device performs the uplink transmission.

In some specific implementations, the terminal device receives the downlink information using the main receiver of the terminal device or turns on the main receiver of the terminal device from a first time before the terminal device performs the uplink transmission. A first duration is intervened between a time when the terminal device begins to perform the uplink transmission and the first time. Optionally, the first duration may be predefined or configured by the network device.

In some other implementations, the terminal device receives the downlink information using the main receiver of the terminal device or turns on the main receiver of the terminal device from a second time after the terminal device performs the uplink transmission. A second duration is intervened between a time when the terminal device completes the uplink transmission and the second time. Optionally, the second duration may be predefined or configured by the network device.

In some embodiments, in a CG-SDT scenario, the terminal device may turn on the main receiver at the first time before the start of the CG-SDT. The first duration is intervened between the first time and the start time of the execution of the CG-SDT. Optionally, the terminal device may measure the downlink reference signal (e.g., the SSB) during the first duration, and determine a downlink reference signal that satisfies a condition (e.g., an SSB that satisfies a signal quality threshold). That is, the terminal device may acquire downlink beam information for initiating the CG-SDT during the first duration, and further select the CG resource for the SDT based on the downlink reference signal (e.g., the SSB).

In some embodiments, in the CG-SDT scenario, the terminal device needs to receive the scheduling information from the network device after performing the CG-SDT, and thus, the terminal device may turn on the main receiver after performing the CG-SDT, to receive retransmission scheduling information or new transmission scheduling information for the CG-SDT.

In some specific implementations, the terminal device starts a configured grant SDT retransmission timer (i.e., a cg-SDT-RetransmissionTimer) after transmitting a first uplink message using the CG resource, and the terminal device does not turn off the main receiver of the terminal device during a running time of the cg-SDT-RetransmissionTimer. Optionally, if the terminal device receives a retransmission scheduling for the uplink message during the running time of the cg-SDT-RetransmissionTimer, the terminal device may restart the cg-SDT-RetransmissionTimer after retransmitting the uplink message. Alternatively, if the terminal device receives a new transmission scheduling, the terminal device may transmit a new uplink message and restart the cg-SDT-RetransmissionTimer. The main receiver of the terminal device is not turned off until the cg-SDT-RetransmissionTimer expires. Optionally, the terminal device may turn off the main receiver when the terminal device determines that the uplink transmission based on the CG is successful; or the terminal device may turn off the main receiver when the uplink transmission is successful and there is no new uplink transmission. For example, if no retransmission scheduling or new transmission scheduling is received from the network device during the running time of the cg-SDT-RetransmissionTimer, the terminal device may turn off the main receiver.

In some embodiments, in a random access scenario, the terminal device may turn on the main receiver at the first time before the start of the random access. The first duration is intervened between the first time and the start time of the random access. Optionally, the terminal device may measure the downlink reference signal (e.g., the SSB) during the first duration, determine a downlink reference signal that satisfies a condition (e.g., an SSB that satisfies a signal quality threshold), and further select a Physical Random Access Channel (PRACH) resource for the random access based on the downlink reference signal (e.g., the SSB).

In some embodiments, in the random access scenario, after the terminal device transmits a first message in the random access procedure, the main receiver may be turned on for receiving the downlink information in the random access procedure, such as Msg2 or Msg4.

In some embodiments, the terminal device may stop receiving the downlink information using the main receiver or turn off the main receiver after completing the random access procedure. Alternatively, the terminal device may stop receiving the downlink information using the main receiver or turn off the main receiver depending on a reason for triggering the random access procedure. For example, when the reason for triggering the random access procedure is the RRC connection establishment or re-establishment, the terminal device may not turn off the main receiver, because the RRC connection establishment is mainly for converting the RRC state of the terminal device to the RRC-CONNECTED state, so as to perform the data transmission. For another example, when the reason for triggering the random access procedure is the SDT, the terminal device may turn off the main receiver after the SDT is completed.

In some embodiments, for the uplink grant free transmission, the terminal device may start a configuredGrantTimer after performing the uplink transmission through the CG resource. Optionally, during a running time of the configuredGrantTimer, the main receiver of the terminal device is in a turned-on state, or the terminal device receives the downlink scheduling information using the main receiver. Optionally, when the configuredGrantTimer expires, if the terminal device does not receive the retransmission scheduling for the uplink transmission and there is no new uplink grant free transmission, the terminal device may turn off the main receiver of the terminal device, or the terminal device may stop receiving the downlink scheduling information using the main receiver.

Third embodiment: the terminal device receives the downlink information using the main receiver and/or turns on the main receive, based on the downlink reception requirement.

Correspondingly, the network device may transmit the downlink information based on the downlink reception requirement of the terminal device or a downlink transmission requirement of the network device.

In some embodiments, the downlink information associated with the downlink reception requirement of the terminal device includes downlink information regularly received by the terminal device, or downlink information periodically received by the terminal device, such as downlink common control information or the SI.

As an example rather than a limitation, the downlink common control information includes, but is not limited to, the SFI.

In some embodiments, for the downlink transmission specific to the terminal device, the network device may wake up the main receiver of the terminal device through the WUS, to implement the reception of the downlink transmission. The terminal device needs to acquire some downlink common control information regularly, such as SFI, so the terminal device can automatically turn on the main receiver and receive the downlink common control information.

In some embodiments, the SFI is carried via the DCI format 2-0. The SFI may configure slot formats of multiple serving cells simultaneously. The network device configures, through an RRC signaling, a cell index and a position of a start bit of a slot format combination identifier (i.e., slotFormatCombinationId) corresponding to the cell index in the DCI format 2-0. The network device configures multiple slot format combinations (i.e., slotFormatCombination), each slot format combination corresponds to an identifier (i.e., slotFormatCombinationId) and slot format configurations for a set of slots, and each slot format configuration is used to configure a slot format of a slot. The SFI includes an SFI-index, which corresponds to the slotFormatCombinationId. A set of slot formats may be determined based on the SFI-index. The slot format indicated by the SFI is applicable to multiple consecutive slots starting from a slot carrying SFI signaling, and the number of slots indicated by the SFI is greater than or equal to a monitoring cycle for a PDCCH carrying the SFI.

In some embodiments, the downlink common control information is received using the main receiver of the terminal device based on a monitoring occasion for the downlink common control information.

For example, the downlink common control information is received using the main receiver of the terminal device in the monitoring occasion for the downlink common control information. Alternatively, the downlink common control information is received using the main receiver of the terminal device before the monitoring occasion for the downlink common control information.

In some embodiments, the main receiver of the terminal device is turned on based on a monitoring occasion for the downlink common control information.

For example, the main receiver of the terminal device is turned on in the monitoring occasion for the downlink common control information.

For another example, since it takes a certain amount of time (or called the wake up duration of the main receiver) from a time when the main receiver is turned on to a time when the main receiver is ready to receive the downlink common control information, the main receiver of the terminal device may be turned on before the monitoring occasion for the downlink common control information.

In some embodiments, the downlink common control information is monitored periodically, and the terminal device may receive the downlink common control information periodically using the main receiver of the terminal device, or turn on the main receiver of the terminal device periodically.

For example, a turned-on cycle of the main receiver is determined based on a monitoring cycle for the downlink common control information (for example, the turning-on cycle of the main receiver is an integer multiple of the monitoring cycle for the downlink common control information), and/or a turned-on duration of the main receiver is determined based on a duration of the monitoring occasion for the downlink common control information.

In a specific example, the turned-on cycle of the main receiver may be determined based on the monitoring cycle for the PDCCH carrying the SFI. For example, the turned-on cycle of the main receiver may be an integer multiple of the monitoring cycle for the PDCCH, and the turned-on duration is equal to the duration of the monitoring occasion for the PDCCH.

In some embodiments, the terminal device may also shop receiving the downlink information using the main receiver or turn off the main receiver based on a completion status of the downlink reception requirement.

For example, when an uplink reception associated with the downlink reception requirement is completed, a reception of the downlink information using the main receiver is stopped, or the main receiver is turned off.

For another example, when a downlink reception associated with the downlink reception requirement is completed, the reception of the downlink information using the main receiver is stopped, or the main receiver is turned off.

For another example, when the downlink reception associated with the downlink reception requirement is completed and there is no new transmission requirement, the reception of the downlink information using the main receiver is stopped, or the main receiver is turned off.

It should be understood that in the embodiments of the disclosure, the above first embodiment to the above third embodiment may be implemented individually, or may be implemented in combination, and the disclosure is not limited thereto. For example, the downlink information is received using the main receiver based on the timer and the timer is determined based on the monitoring cycle for the downlink common control information, which may be understood as the terminal device receiving the downlink common control information using the main receiver based on a reception requirement for the downlink common control information.

It should be understood that in the embodiments of the disclosure, the terminal device may stop receiving downlink information using the main receiver of the terminal device or turn off the main receiver, based on indication information form the network device or the timer.

For example, when the indication information is received from the network device or the timer expires, the reception of the downlink information using the main receiver of the terminal device is stopped, or the main receiver is turned off. The indication information indicates a fallback to the first communication state (i.e., a fallback to a WUS-based wake-up of the main receiver) or indicates to stop using the main receiver of the terminal device, or indicates to turn off the main receiver of the terminal device.

In some embodiments, the indication information from the network device may be explicit indication information or implicit indication information, and the specific indication method is not limited by the disclosure.

In some embodiments of the disclosure, the method 200 further includes the following operations.

The terminal device transmits first indication information to the network device.

Correspondingly, the network device receives the first indication information from the terminal device. The first indication information indicates a change in a communication state of the terminal device or a change in a state of the main receiver.

For example, the first indication information indicates that the first communication state is exited, or that the main receiver of the terminal device is in a turned-on state, or that the main receiver of the terminal device is started to receive the downlink information.

Therefore, in the embodiments of the disclosure, in the first communication state, when the terminal device determines to receive the downlink information using the main receiver based on the first information or when the main receiver is turned on, the first indication information may be transmitted to the network device for notifying the network device of a current communication state of the terminal device, thereby ensuring that the terminal device and the network device have the same understanding of the communication state. Further, the network device may communicate with the terminal device without waking up the main receiver of the terminal device through the WUS.

In some embodiments, the terminal device in the RRC-CONNECTED state may notify the network device of the current communication state of the terminal device through the first indication information.

In some embodiments, the first indication information is transmitted through uplink signaling, which may be, for example, a Physical Uplink Control Channel (PUCCH). Optionally, the first indication information may further include information on a turned-on duration of the main receiver.

In some embodiments, the first indication information is transmitted through a CG resource.

In some embodiments, the main receiver of the terminal device may be transmitted before transmitting the first indication information, or may be transmitted after transmitting the first indication information.

In summary, in the embodiments of the disclosure, the terminal device can receive the downlink information using the main receiver of the terminal device or turn on the main receiver autonomously, based on the timer, the uplink transmission requirement, or the downlink reception requirement. On the one hand, the resource overhead and the wake up delay caused by waking up the main receiver of the terminal device through the WUS from the network device can be reduced. On the other hand, the mechanism for turning on the main receiver of the terminal device is enriched, and the impact on the communication of the terminal device when the main receiver is turned on only via the WUS can be reduced.

FIG. 11 is a schematic diagram illustrating a method 300 for wireless communication according to an embodiment of the disclosure. As illustrated in FIG. 11, the method 300 includes at least some of the following contents.

At S310, when transmitting first indication information to a network device in a first communication state, a terminal device receives downlink information using a main receiver of the terminal device and/or turns on the main receiver of the terminal device. A WUR of the terminal device monitors a WUS for waking up the main receiver of the terminal device in the first communication state.

In some embodiments, the main receiver of the terminal device may be transmitted before transmitting the first indication information, or may be transmitted after transmitting the first indication information.

In some embodiments, the first indication information indicates a change in a communication state of the terminal device or a change in a state of the main receiver. For example, the first indication information indicates that the first communication state is exited, or that the main receiver of the terminal device is in a turned-on state, or that the main receiver of the terminal device is started to receive the downlink information.

It should be understood that there is no limitation in the method 300 as to the reason why the terminal device turns on the main receiver or receives the downlink information using the main receiver in the first communication state. The reason may be the triggering reason in the method 200, for example, based on a timer, or based on an uplink transmission requirement or downlink reception requirement of the terminal device. Alternatively, when the main receiver is in a turned-off state, the WUR may be used to perform certain measurements, to assist in determining whether to turn on the main receiver for more accurate measurements.

Therefore, in the embodiments of the disclosure, the terminal device may turn on the main receiver autonomously or receive the downlink information autonomously using the main receiver, and notify the network device of a communication state of the terminal device (or the state of the main receiver), thereby ensuring that the terminal device and the network device have the same understanding of the communication state of the terminal device, and facilitating scheduling of the terminal device by the network device.

In some embodiments, the first indication information is transmitted through uplink signaling, which may be, for example, a PUCCH. Optionally, the first indication information may further include information on a turned-on duration of the main receiver.

In some embodiments, the first indication information is transmitted through a CG resource.

In some embodiments of the disclosure, the method 300 further includes the following operations.

The reception of the downlink information using the main receiver of the terminal device is stopped and/or the main receiver is turned off based on a timer and/or a reception status of the downlink information. Correspondingly, the network device may transmit the downlink information to the terminal device based on the timer.

For example, when the timer expires, the reception of the downlink information using the main receiver of the terminal device is stopped and/or the main receiver is turned off.

For another example, when the downlink information is received successfully, the reception of the downlink information using the main receiver of the terminal device is stopped and/or the main receiver is turned off.

For another example, when the downlink information is received successfully and there is no new communication requirement, the reception of the downlink information using the main receiver of the terminal device is stopped and/or the main receiver is turned off.

In some implementations, the operation of determining whether to stop receiving the downlink information using the main receiver of the terminal device based on the timer and/or the reception status of the downlink information may include the following operation.

A first timer is turned on when transmitting the first indication information to the network device.

When the timer expires, a reception of the downlink information using the main receiver of the terminal device is stopped and/or the main receiver is turned off.

In some implementations, the operation of stopping receiving the downlink information using the main receiver of the terminal device based on the timer and/or the reception status of the downlink information may include the following operations.

A second timer is turned on when receiving a DCI from the network device.

If no further DCI is received during a running time of the second timer, the reception of the downlink information using the main receiver of the terminal device is stopped and/or the main receiver is turned off.

In a specific example, the network device may learn that the terminal device has turned on the main receiver when receiving the first indication information, and thus, the network device may transmit the DCI to the terminal device, and the DCI is used for carrying scheduling information. The terminal device starts or restarts the second timer when receiving the DCI every time. If no new DCI is received until the second timer expires, the terminal device stops receiving the downlink information using the main receiver of the terminal device or turns off the main receiver when the second timer expires.

In summary, in the embodiments of the disclosure, the terminal device may turn on the main receiver autonomously or receive the downlink information autonomously using the main receiver, and notify the network device of the communication state of the terminal device, thereby ensuring that the terminal device and the network device have the same understanding of the communication state of the terminal device. On the one hand, the resource overhead and the wake up delay caused by waking up the main receiver of the terminal device through the WUS from the network device can be reduced. On the other hand, a mechanism for turning on the main receiver of the terminal device is enriched, and an impact on a communication of the terminal device when the main receiver is turned on only via the WUS can be reduced.

The method embodiments of the disclosure are described above in detail with reference to FIG. 8 to FIG. 11, and the device embodiments of the disclosure will be described below in detail with reference to FIG. 12 to FIG. 18. It should be understood that the device embodiments correspond to the method embodiments, and similar descriptions may refer to the method embodiments.

FIG. 12 is a schematic block diagram of a terminal device 1000 according to an embodiment of the disclosure. As illustrated in FIG. 12, the terminal device 1000 includes a communication unit 1010.

The communication unit 1010 is configured to receive, in a first communication state, downlink information using a main receiver of the terminal device based on first information. A WUR of the terminal device monitors a WUS for waking up the main receiver of the terminal device in the first communication state, and the first information includes at least one of: a timer, an uplink transmission requirement of the terminal device, or a downlink reception requirement of the terminal device.

In some embodiments, the terminal device further includes a processing unit.

The processing unit is configured to turn on the main receiver of the terminal device based on the first information in the first communication state.

In some embodiments, an uplink transmission associated with the uplink transmission requirement of the terminal device includes at least one of: a small data transmission, a random access, an SR transmission, or an uplink grant free transmission.

In some embodiments, the uplink transmission is associated with the downlink information.

In some embodiments, the uplink transmission is the small data transmission, and the downlink information includes: a downlink reference signal and/or downlink scheduling information.

In some embodiments, the uplink transmission is the random access, and the downlink information includes a downlink reference signal and/or downlink information in a random access procedure.

In some embodiments, the uplink transmission is the SR transmission, and the downlink information includes downlink scheduling information.

In some embodiments, the uplink transmission is the uplink grant free transmission, and the downlink information includes downlink scheduling information.

In some embodiments, the downlink reception requirement of the terminal device includes a reception of downlink common control information.

In some embodiments, the downlink common control information includes slot format indication information.

In some embodiments, the communication unit 1010 is further configured to: receive the downlink common control information using the main receiver of the terminal device based on a monitoring occasion for the downlink common control information.

In some embodiments, the terminal device further includes a processing unit.

The processing unit is configured to turn on the main receiver of the terminal device based on a monitoring occasion for the downlink common control information.

In some embodiments, the downlink common control information is monitored periodically, a turned-on cycle of the main receiver is determined based on a monitoring cycle for the downlink common control information, and/or a turned-on duration of the main receiver is determined based on a duration of the monitoring occasion for the downlink common control information.

In some embodiments, the communication unit 1010 is further configured to: receive the downlink information periodically using the main receiver of the terminal device based on the timer.

In some embodiments, the communication unit 1010 is further configured to: receive, based on control information from a network device, the downlink information periodically using the main receiver of the terminal device based on the timer.

In some embodiments, the terminal device further includes a processing unit.

The processing unit is configured to turn on the main receiver of the terminal device periodically based on the timer.

In some embodiments, the communication unit 1010 is further configured to: transmit first indication information to a network device. Herein, the first indication information indicates that the first communication state is exited, or that the main receiver of the terminal device is in a turned-on state, or that the main receiver of the terminal device is started to receive the downlink information.

In some embodiments, the first indication information is transmitted through a PUCCH.

In some embodiments, the first indication information is transmitted through a CG resource.

In some embodiments, the communication unit 1010 is further configured to: stop receiving the downlink information using the main receiver of the terminal device when a first condition is satisfied.

Herein, the first condition includes at least one of: the timer expiring; an uplink transmission associated with the uplink transmission requirement of the terminal device being completed; a downlink reception associated with the downlink reception requirement of the terminal device being completed; or indication information being received from a network device and indicating a fallback to the first communication state, or indicating to stop using the main receiver of the terminal device, or indicating to turn off the main receiver of the terminal device.

In some embodiments, the terminal device further includes a processing unit.

The processing unit is configured to turn off the main receiver of the terminal device when a first condition is satisfied.

Herein, the first condition includes at least one of: the timer expiring; an uplink transmission associated with the uplink transmission requirement of the terminal device being completed; a downlink reception associated with the downlink reception requirement of the terminal device being completed; or indication information being received from a network device and indicating a fallback to the first communication state, or indicating to stop using the main receiver of the terminal device, or indicating to turn off the main receiver of the terminal device.

Optionally, in some embodiments, the above receiving unit may be a communication interface or a transceiver, or an input/output interface of a communication chip or a system-on-chip.

It should be understood that the terminal device 1000 according to the embodiments of the disclosure may correspond to the terminal device in the method embodiments of the disclosure. The various units in the terminal device 1000 perform the above and other operations and/or functions to implement the corresponding processes of the terminal device in the method illustrated in FIG. 8 to FIG. 10. For simplicity, elaborations are omitted herein.

FIG. 13 is a schematic block diagram of a terminal device 1100 according to an embodiment of the disclosure. As illustrated in FIG. 13, the terminal device 1100 includes a communication unit 1110.

The communication unit 1110 is configured to receive downlink information using a main receiver of the terminal device when the terminal device transmits first indication information to a network device in a first communication state. A WUR of the terminal device monitors a WUS for waking up the main receiver of the terminal device in the first communication state.

In some embodiments, the first indication information indicates that the first communication state is exited, or that the main receiver of the terminal device is in a turned-on state, or that the main receiver of the terminal device is started to receive the downlink information.

In some embodiments, the first indication information is transmitted through a PUCCH.

In some embodiments, the first indication information is transmitted through a CG resource.

In some embodiments, the communication unit 1110 is further configured to: stop receiving the downlink information using the main receiver of the terminal device based on a timer and/or a reception status of the downlink information.

In some embodiments, the terminal device further includes a processing unit.

The processing unit is configured to turn on a first timer when transmitting the first indication information to the network device.

In some embodiments, the communication unit 1110 is further configured to: stop receiving the downlink information using the main receiver of the terminal device when the first timer expires.

In some embodiments, the terminal device further includes a processing unit.

The processing unit is configured to turn on a second timer when receiving a DCI from the network device.

In some embodiments, the communication unit 1110 is further configured to: if no further DCI is received during a running time of the second timer, stop receiving the downlink information using the main receiver of the terminal device.

In some embodiments, the communication unit 1110 is further configured to: turn off the main receiver of the terminal device based on a timer and/or a reception status of the downlink information.

In some embodiments, the terminal device further includes a processing unit.

The processing unit is configured to: turn on a first timer when transmitting the first indication information to the network device; and turn off the main receiver of the terminal device when the first timer expires.

In some embodiments, the terminal device further includes a processing unit.

The processing unit is configured to: turn on a second timer when receiving a DCI from the network device; and if no further DCI is received during a running time of the second timer, turn off the main receiver of the terminal device. Optionally, in some embodiments, the above receiving unit may be a communication interface or a transceiver, or an input/output interface of a communication chip or a system-on-chip.

It should be understood that the terminal device 1100 according to the embodiments of the disclosure may correspond to the terminal device in the method embodiments of the disclosure. The various units in the terminal device 1100 perform the above and other operations and/or functions to implement the corresponding processes of the terminal device in the method illustrated in FIG. 11. For simplicity, elaborations are omitted herein.

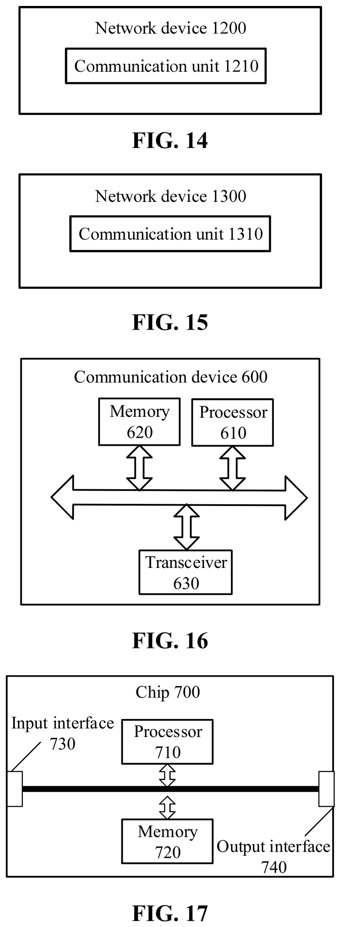

FIG. 14 is a schematic block diagram of a network device 1200 according to an embodiment of the disclosure. As illustrated in FIG. 14, the network device 1200 includes a communication unit 1210.

The communication unit 1210 is configured to transmit downlink information to a terminal device in a first communication state based on first information. A wake up receiver of the terminal device monitors a WUS for waking up a main receiver of the terminal device in the first communication state, the downlink information is received by the terminal device using the main receiver, and the first information includes at least one of: a timer, an uplink transmission requirement of the terminal device, or a downlink reception requirement of the terminal device.

In some embodiments, an uplink transmission associated with the uplink transmission requirement of the terminal device includes at least one of: a small data transmission, a random access, an SR transmission, or an uplink grant free transmission.

In some embodiments, the uplink transmission is associated with the downlink information.

In some embodiments, the downlink reception requirement of the terminal device includes a reception of downlink common control information.

In some embodiments, the downlink common control information includes slot format indication information.

In some embodiments, the communication unit 1210 is further configured to: receive first indication information from the terminal device. Herein, the first indication information indicates that the terminal device exits the first communication state, or that the main receiver of the terminal device is in a turned-on state, or that the main receiver of the terminal device is started to receive the downlink information.

In some embodiments, the first indication information is transmitted through a PUCCH.

In some embodiments, the first indication information is transmitted through a CG resource.

Optionally, in some embodiments, the above receiving unit may be a communication interface or a transceiver, or an input/output interface of a communication chip or a system-on-chip.

It should be understood that the network device 1200 according to the embodiments of the disclosure may correspond to the network device in the method embodiments of the disclosure. The various units in the network device 1200 perform the above and other operations and/or functions to implement the corresponding processes of the network device in the method illustrated in FIG. 8 to FIG. 10. For simplicity, elaborations are omitted herein.

FIG. 15 is a schematic block diagram of a network device 1300 according to an embodiment of the disclosure. As illustrated in FIG. 15, the network device 1300 includes a communication unit 1310.

The communication unit 1310 is configured to receive first indication information from a terminal device. The first indication information is transmitted by the terminal device in a first communication state, and a WUR of the terminal device monitors a WUS for waking up a main receiver of the terminal device in the first communication state.

The first indication information indicates that the first communication state is exited, or that the main receiver of the terminal device is in a turned-on state, or that the main receiver of the terminal device is started to receive the downlink information.

In some embodiments, the first indication information is transmitted through a PUCCH.

In some embodiments, the first indication information is transmitted through a CG resource.

In some embodiments, the communication unit 1310 is further configured to transmit downlink scheduling information to the terminal device based on the timer.

Optionally, in some embodiments, the above transmitting unit may be a communication interface or a transceiver, or an input/output interface of a communication chip or a system-on-chip.

It should be understood that the network device 1300 according to the embodiments of the disclosure may correspond to the network device in the method embodiments of the disclosure. The various units in the network device 500 perform the above and other operations and/or functions to implement the corresponding processes of the network device in the method illustrated in FIG. 11. For simplicity, elaborations are omitted herein.

FIG. 16 is a schematic structure diagram of a communication device 600 according to an embodiment of the disclosure. The communication device 600 illustrated in FIG. 16 includes a processor 610. The processor 610 is configured to call a computer program from a memory and run the computer program to perform the methods in the embodiments of the disclosure.

Optionally, as illustrated in FIG. 16, the communication device 600 may further include a memory 620. The processor 610 may be configured to call the computer program from the memory 620 and run the computer program to perform the methods in the embodiments of the disclosure.

The memory 620 may be a separate device independent of the processor 610 or may be integrated into the processor 610.

Optionally, as illustrated in FIG. 16, the communication device 600 may further include a transceiver 630, and the processor 610 may be configured to control the transceiver 630 to communicate with other devices, in particular to transmit information or data to other devices, or receive information or data from other devices.

The transceiver 630 may include a transmitter and a receiver. The transceiver 630 may further include an antenna. The number of the antennas may be one or more.

Optionally, the communication device 600 may specifically be the network device in the embodiments of the disclosure, and the communication device 600 may implement corresponding processes implemented by the network device in each method in the embodiments of the disclosure. For simplicity, elaborations are omitted herein.

Optionally, the communication device 600 may specifically be the mobile terminal/ terminal device in the embodiments of the disclosure, and the communication device 600 may implement corresponding processes implemented by the mobile terminal/terminal device in each method in the embodiments of the disclosure. For simplicity, elaborations are omitted herein.

FIG. 17 is a schematic structure diagram of a chip according to an embodiment of the disclosure. The chip 700 illustrated in FIG. 17 includes a processor 710. The processor 710 is configured to call a computer program from a memory and run the computer program to perform the methods in the embodiments of the disclosure.

Optionally, as illustrated in FIG. 17, the chip 700 may further include a memory 720. The processor 710 may be configured to call the computer program from the memory 720 and run the computer program to perform the methods in the embodiments of the disclosure.

The memory 720 may be a separate device independent of the processor 710, or may be integrated into the processor 710.

Optionally, the chip 700 may further include an input interface 730. The processor 710 may be configured to control the input interface 730 to communicate with another device or chip, in particular to acquire information or data transmitted by another device or chip.

Optionally, the chip 700 may further include an output interface 740. The processor 710 may be configured to control the output interface 740 to communicate with another device or chip, in particular to output information or data to another device or chip.

Optionally, the chip may be applied to the network device in the embodiments of the disclosure, and the chip may be configured to implement the corresponding processes implemented by the network device in each method in the embodiments of the disclosure. For simplicity, elaborations are omitted herein.

Optionally, the chip may be applied to the mobile terminal/terminal device in the embodiments of the disclosure, and the chip may be configured to implement the corresponding processes implemented by the mobile terminal/terminal device in each method in the embodiments of the disclosure. For simplicity, elaborations are omitted herein.

It should be understood that the chip mentioned in the embodiments of the disclosure may also be called a system-level chip, a system chip, a chip system or a system on chip, etc.

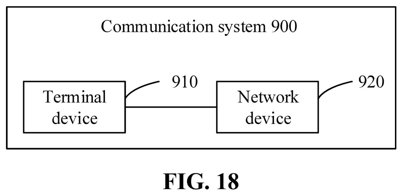

FIG. 18 is a schematic block diagram of a communication system 900 according to an embodiment of the disclosure. As illustrated in FIG. 18, the communication system 900 includes a terminal device 910 and a network device 920.

The terminal device 910 may be configured to implement the corresponding functions implemented by the terminal device in the above methods, and the network device 920 may be configured to implement the corresponding functions implemented by the network device in the above methods. For simplicity, elaborations are omitted herein.

It should be understood that the processor in the embodiments of the disclosure may be an integrated circuit chip and has a signal processing capability. In an implementation process, each operation in the method embodiments may be completed by an integrated logical circuit in a hardware form in the processor or instructions in a software form. The above processor may be a general purpose processor, a Digital Signal Processor (DSP), an Application Specific Integrated Circuit (ASIC), a Field Programmable Gate Array (FPGA), or other programmable logic devices, a discrete gate or transistor logical device, or a discrete hardware component, for implementing or executing each method, step and logical block diagram disclosed in the embodiments of the disclosure. The general purpose processor may be a microprocessor or the processor may also be any conventional processor and the like. The steps in the methods disclosed in combination with the embodiments of the disclosure may be directly embodied to be executed and completed by a hardware decoding processor or executed and completed by a combination of hardware in the decoding processor and software modules. The software module may be located in a mature storage medium in this field such as a Random Access Memory (RAM), a flash memory, a Read-Only Memory (ROM), a Programmable ROM (PROM), an Electrically Erasable PROM (EEPROM) or a register. The storage medium is located in a memory, and the processor reads information in the memory, and completes the steps in the above methods in combination with the hardware of the processor.

It should be understood that the memory in the embodiments of the disclosure may be a volatile memory or a non-volatile memory, or may include both the volatile and the non-volatile memories. The non-volatile memory may be a ROM, a PROM, an Erasable PROM (EPROM), an EEPROM or a flash memory. The volatile memory may be a RAM, and is used as an external cache. By way of illustrative but not limiting description, RAMs in various forms may be adopted, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) and a Direct Rambus RAM (DR RAM). It should be noted that the memory for the system and method described in the disclosure is intended to include, but not limited to, these and any other suitable types of memories.

It should be understood that the above description of the memory is exemplary and non-limiting. For example, the memory in the embodiments of the disclosure may also be an SRAM, a DRAM, an SDRAM, a DDR SDRAM, an ESDRAM, an SLDRAM, a DR RAM and the like. That is, the memory in the embodiments of the disclosure is intended to include, but not limited to, these and any other suitable types of memories.

An embodiment of the disclosure further provides a computer-readable storage medium for storing a computer program.

Optionally, the computer-readable storage medium may be applied to the network device in the embodiments of the disclosure, and the computer program causes a computer to execute the corresponding processes implemented by the network device in each method in the embodiments of the disclosure. For simplicity, elaborations are omitted herein.

Optionally, the computer-readable storage medium may be applied to the mobile terminal/terminal device in the embodiments of the disclosure, and the computer program causes a computer to execute the corresponding processes implemented by the mobile terminal/terminal device in each method in the embodiments of the disclosure. For simplicity, elaborations are omitted herein.

An embodiment of the disclosure further provides a computer program product including computer program instructions.

Optionally, the computer program product may be applied to the network device in the embodiments of the disclosure, and the computer program instructions cause a computer to execute the corresponding processes implemented by the network device in each method in the embodiments of the disclosure. For simplicity, elaborations are omitted herein.

Optionally, the computer program product may be applied to the mobile terminal/terminal device in the embodiments of the disclosure, and the computer program instructions cause a computer to execute the corresponding processes implemented by the mobile terminal/terminal device in each method in the embodiment of the disclosure. For simplicity, elaborations are omitted herein.

An embodiment of the disclosure further provides a computer program.

Optionally, the computer program may be applied to the network device in the embodiments of the disclosure. When the computer program is run on a computer, the computer program causes the computer to execute the corresponding processes implemented by the network device in each method in the embodiments of the disclosure. For simplicity, elaborations are omitted herein.

Optionally, the computer program may be applied to the mobile terminal/terminal device in the embodiments of the disclosure. When the computer program is run on a computer, the computer program causes the computer to execute the corresponding process implemented by the mobile terminal/terminal device in each method in the embodiments of the disclosure. For simplicity, elaborations are omitted herein.

Those of ordinary skill in the art may realize that the units and algorithm steps of each example described in combination with the embodiments disclosed in the disclosure may be implemented by electronic hardware or a combination of computer software and the electronic hardware. Whether these functions are executed in a hardware or software manner depends on specific applications and design constraints of the technical solutions. Professionals may implement the described functions by use of different methods for each specific application, but such implementation shall fall within the scope of the disclosure.

Those skilled in the art may clearly learn about that specific working processes of the system, device and unit described above may refer to the corresponding processes in the method embodiments and will not be elaborated herein for convenient and brief description.

In some embodiments provided by the disclosure, it is to be understood that the disclosed system, device and method may be implemented in another manner. For example, the device embodiment described above is only schematic, and for example, division of the units is only a logic function division, and other division manners may be adopted during a practical implementation. For example, multiple units or components may be combined or integrated into another system, or some characteristics may be neglected or not executed. In addition, a coupling or direct coupling or communication connection between displayed or discussed components may be an indirect coupling or communication connection through some interfaces, devices or units, and may be electrical, mechanical or in other forms.

The units described as separate parts may or may not be physically separated, and parts displayed as units may or may not be physical units, and namely may be located in the same place, or may also be distributed onto multiple network units. Part or all of the units may be selected to achieve the purpose of the solutions in the embodiments according to a practical requirement.

In addition, functional units in each embodiment of the disclosure may be integrated into a processing unit, each unit may also exist physically and independently, or two or more than two units may also be integrated into a unit.

When being realized in form of a software functional unit and sold or used as an independent product, the function may also be stored in a computer-readable storage medium. Based on such an understanding, the technical solutions of the disclosure substantially or parts making contributions to the conventional art or part of the technical solutions may be embodied in form of a software product, and the computer software product is stored in a storage medium, including a plurality of instructions configured to enable a computer device (which may be a personal computer, a server, a network device or the like) to execute all or part of the steps of the method in each embodiment of the disclosure. The abovementioned storage medium includes: various media capable of storing program codes such as a U disk, a mobile hard disk, a ROM, a RAM, a magnetic disk or an optical disk.

Described above are merely specific embodiments of the disclosure and the scope of protection of the disclosure is not limited thereto. Any variation or replacement easily conceivable by those skilled in the art within the technical scope disclosed by the disclosure shall fall within the scope of protection of the disclosure. Therefore, the scope of protection of the disclosure shall be subject to the scope of protection of the claims.

## Claims

1. A method for wireless communication, comprising:
receiving, by a terminal device in a first communication state, downlink information using a main receiver of the terminal device based on first information, wherein a wake up receiver of the terminal device monitors a Wake Up Signal (WUS) for waking up the main receiver of the terminal device in the first communication state, and the first information comprises at least one of:
a timer, an uplink transmission requirement of the terminal device, or a downlink reception requirement of the terminal device.

2. The method of claim 1, further comprising:
turning on, in the first communication state, the main receiver of the terminal device based on the first information.

3. The method of claim 1 or 2, wherein an uplink transmission associated with the uplink transmission requirement of the terminal device comprises at least one of:
a small data transmission, a random access, a Scheduling Request (SR) transmission, or an uplink grant free transmission.

4. The method of claim 3, wherein the uplink transmission is associated with the downlink information.

5. The method of claim 4, wherein the uplink transmission is the small data transmission, and the downlink information comprises: a downlink reference signal and/or downlink scheduling information.

6. The method of claim 4, wherein the uplink transmission is the random access, and the downlink information comprises: a downlink reference signal and/or downlink information in a random access procedure.

7. The method of claim 4, wherein the uplink transmission is the SR transmission, and the downlink information comprises downlink scheduling information.

8. The method of claim 4, wherein the uplink transmission is the uplink grant free transmission, and the downlink information comprises downlink scheduling information.

9. The method of any of claims 1 to 8, wherein the downlink reception requirement of the terminal device comprises a reception of downlink common control information.

10. The method of claim 9, wherein the downlink common control information comprises slot format indication information.

11. The method of claim 9 or 10, wherein receiving, by the terminal device, the downlink information using the main receiver of the terminal device based on the first information comprises:
receiving the downlink common control information using the main receiver of the terminal device based on a monitoring occasion for the downlink common control information.

12. The method of any of claims 9 to 11, further comprising:
turning on the main receiver of the terminal device based on a monitoring occasion for the downlink common control information.

13. The method of claim 12, wherein the downlink common control information is monitored periodically, and
a turned-on cycle of the main receiver is determined based on a monitoring cycle for the downlink common control information, and/or a turned-on duration of the main receiver is determined based on a duration of the monitoring occasion for the downlink common control information.

14. The method of claim 1, wherein receiving, by the terminal device, the downlink information using the main receiver of the terminal device based on the first information comprises:
receiving the downlink information periodically using the main receiver of the terminal device based on the timer.

15. The method of claim 14, wherein receiving the downlink information periodically using the main receiver of the terminal device based on the timer comprises:
receiving, based on control information from a network device, the downlink information periodically using the main receiver of the terminal device based on the timer.

16. The method of any of claims 1, 14 and 15, further comprising:
turning on the main receiver of the terminal device periodically based on the timer.

17. The method of any of claims 1 to 16, further comprising:
transmitting, by the terminal device, first indication information to a network device, wherein the first indication information indicates that the first communication state is exited, or that the main receiver of the terminal device is in a turned-on state, or that the main receiver of the terminal device is started to receive the downlink information.

18. The method of claim 17, wherein the first indication information is transmitted through a Physical Uplink Control Channel (PUCCH).

19. The method of claim 17 or 18, wherein the first indication information is transmitted through a Configured Grant (CG) resource.

20. The method of any of claims 1 to 19, further comprising:
stopping receiving the downlink information using the main receiver of the terminal device when a first condition is satisfied,
wherein the first condition comprises at least one of:
the timer expiring;
an uplink transmission associated with the uplink transmission requirement of the terminal device being completed;
a downlink reception associated with the downlink reception requirement of the terminal device being completed; or
indication information being received from a network device, wherein the indication information indicates a fallback to the first communication state, or indicates to stop using the main receiver of the terminal device, or indicates to turn off the main receiver of the terminal device.

21. The method of any of claims 1 to 20, further comprising:
turning off the main receiver of the terminal device when a first condition is satisfied,
wherein the first condition comprises at least one of:
the timer expiring;
an uplink transmission associated with the uplink transmission requirement of the terminal device being completed;
a downlink reception associated with the downlink reception requirement of the terminal device being completed; or
indication information being received from a network device, wherein the indication information indicates a fallback to the first communication state, or indicates to stop using the main receiver of the terminal device, or indicates to turn off the main receiver of the terminal device.

22. A method for wireless communication, comprising:
when transmitting first indication information to a network device in a first communication state, receiving, by a terminal device, downlink information using a main receiver of the terminal device, wherein a wake up receiver of the terminal device monitors a Wake Up Signal (WUS) for waking up the main receiver of the terminal device in the first communication state.

23. The method of claim 22, wherein the first indication information indicates that the first communication state is exited, or that the main receiver of the terminal device is in a turned-on state, or that the main receiver of the terminal device is started to receive the downlink information.

24. The method of claim 22 or 23, wherein the first indication information is transmitted through a Physical Uplink Control Channel (PUCCH).

25. The method of any of claims 22 to 24, wherein the first indication information is transmitted through a Configured Grant (CG) resource.

26. The method of any of claims 22 to 25, further comprising:
stopping receiving the downlink information using the main receiver of the terminal device based on a timer and/or a reception status of the downlink information.

27. The method of claim 26, wherein determining whether to stop receiving the downlink information using the main receiver of the terminal device based on the timer and/or the reception status of the downlink information comprises:
turning on a first timer when transmitting the first indication information to the network device;
stopping receiving the downlink information using the main receiver of the terminal device when the first timer expires.

28. The method of claim 26, wherein stopping receiving the downlink information using the main receiver of the terminal device based on the timer and/or the reception status of the downlink information comprises:
turning on a second timer when receiving Downlink Control Information (DCI) from the network device;
if no further DCI is received during a running time of the second timer, stopping receiving the downlink information using the main receiver of the terminal device.

29. The method of any of claims 22 to 28, further comprising:
turning off the main receiver of the terminal device based on a timer and/or a reception status of the downlink information.

30. The method of claim 29, wherein turning off the main receiver of the terminal device based on the timer and/or the reception status of the downlink information comprises:
turning on a first timer when transmitting the first indication information to the network device;
turning off the main receiver of the terminal device when the first timer expires.

31. The method of any of claims 22 to 30, wherein turning off the main receiver of the terminal device based on the timer and/or the reception status of the downlink information comprises:
turning on a second timer when receiving Downlink Control Information (DCI) from the network device;
if no further DCI is received during a running time of the second timer, turning off the main receiver of the terminal device.

32. A method for wireless communication, comprising:
transmitting, by a network device, downlink information to a terminal device in a first communication state based on first information, wherein a wake up receiver of the terminal device monitors a Wake Up Signal (WUS) for waking up a main receiver of the terminal device in the first communication state, the downlink information is received by the terminal device using the main receiver, and the first information comprises at least one of:
a timer, an uplink transmission requirement of the terminal device, or a downlink reception requirement of the terminal device.

33. The method of claim 32, wherein an uplink transmission associated with the uplink transmission requirement of the terminal device comprises at least one of:
a small data transmission, a random access, a Scheduling Request (SR) transmission, or an uplink grant free transmission.

34. The method of claim 33, wherein the uplink transmission is associated with the downlink information.

35. The method of any of claims 32 to 34, wherein the downlink reception requirement of the terminal device comprises a reception of downlink common control information.

36. The method of claim 35, wherein the downlink common control information comprises slot format indication information.

37. The method of any of claims 32 to 36, further comprising:
receiving, by the network device, first indication information from the terminal device, wherein the first indication information indicates that the terminal device exits the first communication state, or that the main receiver of the terminal device is in a turned-on state, or that the main receiver of the terminal device is started to receive the downlink information.

38. The method of claim 37, wherein the first indication information is transmitted through a Physical Uplink Control Channel (PUCCH).

39. The method of claim 37 or 38, wherein the first indication information is transmitted through a Configured Grant (CG) resource.

40. A method for wireless communication, comprising:
receiving, by a network device, first indication information from a terminal device, wherein the first indication information is transmitted by the terminal device in a first communication state, and a wake up receiver of the terminal device monitors a Wake Up Signal (WUS) for waking up a main receiver of the terminal device in the first communication state,
wherein the first indication information indicates that the first communication state is exited, or that the main receiver of the terminal device is in a turned-on state, or that the main receiver of the terminal device is started to receive downlink information.

41. The method of claim 40, wherein the first indication information is transmitted through a Physical Uplink Control Channel (PUCCH).

42. The method of claim 40 or 41, wherein the first indication information is transmitted through a Configured Grant (CG) resource.

43. The method of any of claims 40 to 42, further comprising:
transmitting downlink scheduling information to the terminal device based on a timer.

44. A terminal device, comprising:
a communication unit, configured to receive, in a first communication state, downlink information using a main receiver of the terminal device based on first information, wherein a wake up receiver of the terminal device monitors a Wake Up Signal (WUS) for waking up the main receiver of the terminal device in the first communication state, and the first information comprises at least one of:
a timer, an uplink transmission requirement of the terminal device, or a downlink reception requirement of the terminal device.

45. A terminal device, comprising:
a communication unit, configured to receive downlink information using a main receiver of the terminal device when the terminal device transmits first indication information to a network device in a first communication state, wherein a wake up receiver of the terminal device monitors a Wake Up Signal (WUS) for waking up the main receiver of the terminal device in the first communication state.

46. A network device, comprising:
a communication unit, configured to transmit downlink information to a terminal device in a first communication state based on first information, wherein a wake up receiver of the terminal device monitors a Wake Up Signal (WUS) for waking up a main receiver of the terminal device in the first communication state, the downlink information is received by the terminal device using the main receiver, and the first information comprises at least one of:
a timer, an uplink transmission requirement of the terminal device, or a downlink reception requirement of the terminal device.

47. A network device, comprising:
a communication unit, configured to receive first indication information from a terminal device, wherein the first indication information is transmitted by the terminal device in a first communication state, and a wake up receiver of the terminal device monitors a Wake Up Signal (WUS) for waking up a main receiver of the terminal device in the first communication state,
wherein the first indication information indicates that the first communication state is exited, or that the main receiver of the terminal device is in a turned-on state, or that the main receiver of the terminal device is started to receive downlink information.

48. A terminal device, comprising: a processor and a memory, wherein the memory is configured to store a computer program, and the processor is configured to call the computer program stored in the memory and run the computer program, to perform the method of any of claims 1 to 21, or the method of any of claims 22 to 31.

49. A network device, comprising: a processor and a memory, wherein the memory is configured to store a computer program, and the processor is configured to call the computer program stored in the memory and run the computer program, to perform the method of any of claims 32 to 39, or the method of any of claims 40 to 43.

50. A chip, comprising: a processor configured to call a computer program from a memory and run the computer program, to cause a device equipped with the chip to perform the method of any of claims 1 to 21, or the method of any of claims 22 to 31, or the method of any of claims 32 to 39, or the method of any of claims 40 to 43.

51. A computer-readable storage medium, configured to store a computer program, wherein the computer program causes a computer to perform the method of any of claims 1 to 21, or the method of any of claims 22 to 31, or the method of any of claims 32 to 39, or the method of any of claims 40 to 43.

52. A computer program product, comprising computer program instructions, wherein the computer program instructions cause a computer to perform the method of any of claims 1 to 21, or the method of any of claims 22 to 31, or the method of any of claims 32 to 39, or the method of any of claims 40 to 43.

53. A computer program, wherein the computer program causes a computer to perform the method of any of claims 1 to 21, or the method of any of claims 22 to 31, or the method of any of claims 32 to 39, or the method of any of claims 40 to 43.
